# EUROPEAN PATENT APPLICATION

(11) **EP 0 879 843 A1**
(43) Date of publication of application: **25.11.1998**
(21) Application number: 98304092.4
(22) Date of filing: 22.05.1998
(51) Int. Cl.: C08J 5/12, C08K 5/101, C08K 5/54, C08L 21/00

(54) **Rubber compositions for adhesion to organic resins and integrally bonded moldings**

(30) Priority: 23.05.1997 JP 150419/97
(71) Applicant: SHIN-ETSU CHEMICAL CO., LTD., Chiyoda-ku Tokyo (JP)
(72) Inventor: Fujiki, Hironao, c/o Shin-Etsu Chemical Co., Ltd., Matsuida-machi, Usui-gun, Gunma-ken (JP); Momii, Kazuma, c/o Shin-Etsu Chemical Co., Ltd., Matsuida-machi, Usui-gun, Gunma-ken (JP); Tanaka, Masaki, c/o Shin-Etsu Chemical Co., Ltd., Chiyoda-ku, Tokyo (JP)
(74) Representative: Stoner, Gerard Patrick

(57) **Abstract**

A rubber composition comprising (A) an uncured rubber, (B) an optional inorganic filler, (C) a compound having at least two phenyl skeletons and an acryl and/or methacryl group in a molecule, and (D) an organic peroxide can be molded and cured to an organic resin in a mold. The rubber is firmly bonded to the resin without a need for primers or adhesives. The molded part can be readily separated from the mold.

## Description

### BACKGROUND

This invention relates to rubber compositions for adhesion to organic resins, and integrally bonded moldings of cured products of the rubber compositions and organic resins.

Certain compositions are cured with organic peroxides into rubbery elastomers. Attempts are made to bond such elastomers to organic resins while they are being cured. JP-A 11013/1995 discloses the bonding of polyamide resins to vulcanized rubber using acrylsilane as an adhesive component.

However, the technique of USP 5,484,848 is effective as long as polyamides are concerned, and is not versatile. Other similar proposals also have many technical limits, for example, the essential use of a special rubber having an acid anhydride or carboxyl group as the rubber component. When it is desired to bond organic resins to rubber, the most common method is by applying a primer to the surface of cured resin, contacting a rubber composition to the primed resin surface, and curing the rubber composition.

USP 5,405,896 discloses an addition reaction type silicone rubber composition which bonds to organic resins, but not to metals. USP 5,366,805 and USP 5,418,065 disclose integrally molded parts of addition reaction type silicone rubbers and organic resins.

In general, addition reaction type silicone rubber compositions are relatively easy to integrally mold with organic resins by blending adhesives therein. However, in the case of rubber to be cured with organic peroxides, primers or adhesives must be used to bond such rubber to organic resins. If the organic peroxide curing type rubber is self-adhesive, there arises the problem that when it is integrally molded with an organic resin in a mold to produce an integrally molded part, it also sticks to the mold. As far as rubber compositions of the organic peroxide curing type are concerned, a rubber composition which can directly and firmly bond to an organic resin without a need for primers or adhesives and which does not stick to a mold is not available.

The general aim here is to provide new and useful peroxide-curable rubber compositions suitable for bonding to organic resins by virtue of a bonding additive, also the use of the characteristic bonding additive for this purpose, methods in which the rubber is bonded to resin during cure thereof and bonded composites resulting form these methods.

We have found that a rubber composition obtained by adding a compound having at least two phenyl skeletons and an acryl and/or methacryl group in a molecule to an organic peroxide-curable rubber can be directly bonded to an organic resin such as a thermoplastic or thermosetting resin at the same time as it is cured with an organic peroxide, without a need for primers or adhesives, thereby producing an integrally molded part. We also found in our work that it was possible to avoid sticking to the mould when the rubber composition and the organic resin were molded, and the molded part could be readily separated from the mold. The organic resins which can be molded with the rubber include thermoplastic resins such as polyamides, polybutylene terephthalate and other polyesters, polycarbonates, polyphenylene sulfide, polyphenylene oxide, ABS resins, polystyrene, and polypropylene, and thermosetting resins such as epoxy resins, urethane resins and phenolic resins. To impart strength to the rubber, inorganic fillers are preferably blended in the rubber composition.

Accordingly, the present invention provides a rubber composition for adhesion to organic resins, comprising
(A) an uncured rubber curable with an organic peroxide, (B) an optional inorganic filler,
(C) a compound having at least two phenyl skeletons and at least one group selected from acryl and methacryl groups in a molecule and, for use
(D) an organic peroxide.

Also contemplated herein is an integrally bonded molding comprising a cured product of the rubber composition integrally bonded to an organic resin.

### FURTHER EXPLANATIONS; PREFERRED AND OPTIONAL FEATURES

Component (A) of the rubber composition according to the invention is an uncured rubber. It may be selected from a variety of commonly used rubbers which can be cured with organic peroxides. Exemplary rubbers include EP(D)M rubber, SBR, NBR, BR, NR, IIR, chlorinated IR, BIIR, CR, silicone rubber, fluoro-rubber, and acrylic rubber, and mixtures of two or more. EP(D)M, silicone rubber and mixtures thereof are preferred.

In the rubber composition of the invention, it is recommended to blend an inorganic filler (B) for increasing the strength. Exemplary inorganic fillers include reinforcing fillers such as carbon black, finely divided silica, calcium carbonate, magnesium carbonate, zinc oxide, and silicates, with the carbon black and finely divided silica being preferred. Examples of the carbon black include channel black, furnace black, thermal black, and acetylene black, which may be treated to be hydrophobic. Examples of the finely divided silica include silicic anhydride, silicic acid hydrate, and colloidal silica, which may be treated to be hydrophobic. Calcium carbonate may be light or heavy, and may be surface treated or not. The silicates include magnesium silicate and aluminum silicate. Other useful inorganic filers include calcium fluoride, dolomite, talc, aluminum hydroxide, mica, aluminum sulfate, barium sulfate, lithopone, calcium sulfate, pumice flour, graphite, and glass fibers. A choice may be made among these in accordance with a particular application.

The inorganic filler (B) is preferably blended in an amount of about 1 to 500 parts by weight, and more preferably about 5 to 300 parts by weight, per 100 parts by weight of component (A). Less than 1 part of the filler is not effective for its purpose whereas more than 500 parts of the filler would render both the unvulcanized rubber and cured rubber too hard, which often becomes a disadvantage in practical use.

Component (C) is a characteristic component. It is a compound having at least two phenyl skeletons and at least one group selected from acryl and methacryl groups in a molecule, preferably acryl or methacryl group at one or both ends and more preferably at both ends of the molecule.

The inclusion of at least two phenyl skeletons in the compound is essential. The at least two phenyl groups may be positioned apart although they are preferably positioned close to each other. A preferred orientation is p-phenylene. One preferred grouping is as follows:

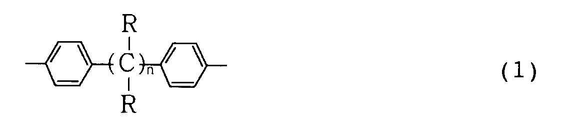

R is hydrogen or substituted or unsubstituted monovalent hydrocarbon groups. The R groups may be the same or different. Letter n is an integer of 0 to 5.

Exemplary monovalent hydrocarbon groups are alkyl and cycloalkyl groups of 1 to 12 carbon atoms, preferably 1 to 8 carbon atoms. Substituted monovalent hydrocarbon groups are such monovalent hydrocarbon groups wherein some or all of the hydrogen atoms are replaced by halogen atoms such as fluorine atoms. Examples include methyl, ethyl, propyl, butyl, cyclohexyl, and trifluoromethyl (CF₃). Preferably R stands for hydrogen, methyl and trifluoromethyl groups.

Other groups having two phenyl groups are given below.

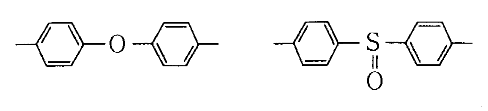

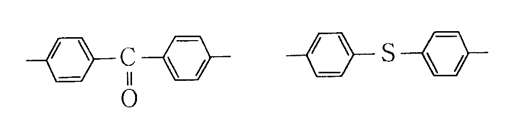

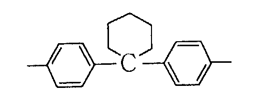

For component (C), it is also essential that at least one group selected from acryl and methacryl groups be contained in a molecule. These groups are preferably positioned at one end, especially at both ends of a molecule.

More preferably, component (C) has the following formula (2): 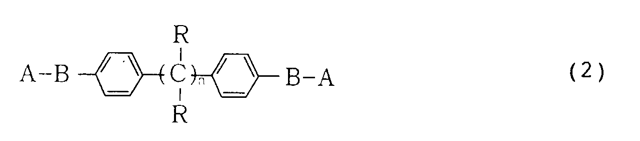 In formula (2), R and n are as defined above. A is, identical or different, an acryl group, methacryl group, acryloxy group or methacryloxy group. B is, identical or different, a divalent organic group having 1 to 10 carbon atoms, preferably 1 to 6 carbon atoms, e.g. including an alkylene group. The divalent organic group may contain one or more of the following groups: 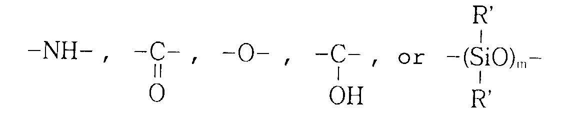 wherein R' is an unsubstituted or halogen-substituted monovalent hydrocarbon group having 1 to 8 carbon atoms, or an alkoxy group having 1 to 3 carbon atoms, and letter m is an integer of 1 to 11. Examples of the monovalent hydrocarbon group are substantially the same as exemplified for R.

Compounds of the following structures are illustrative examples of the compound which can be used as component (C).

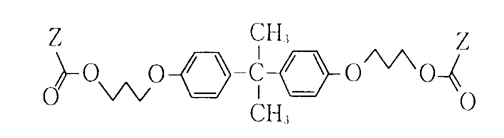

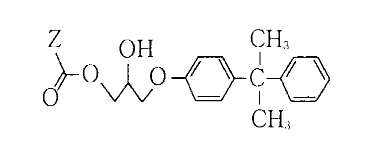

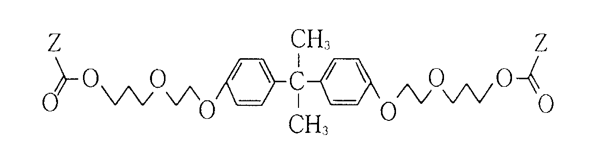

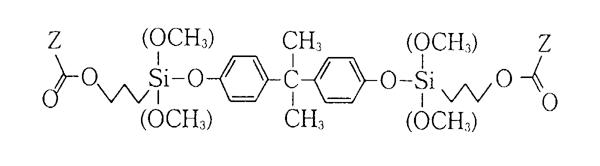

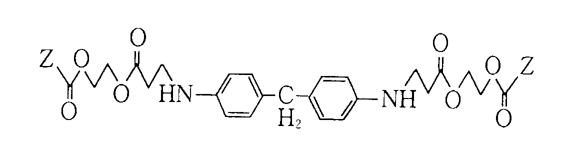

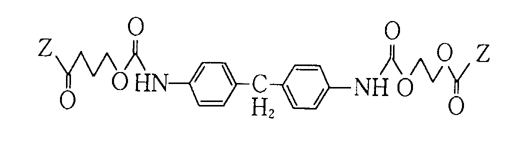

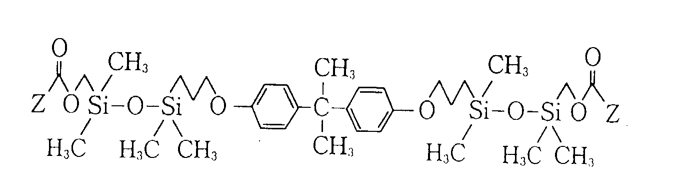

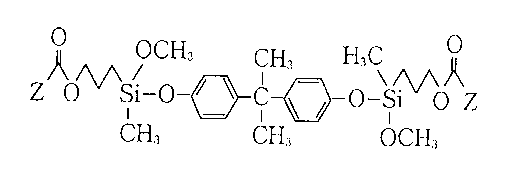

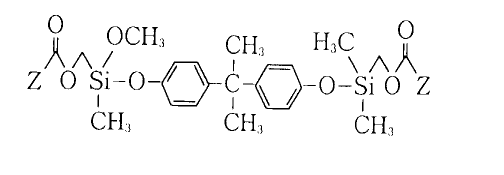

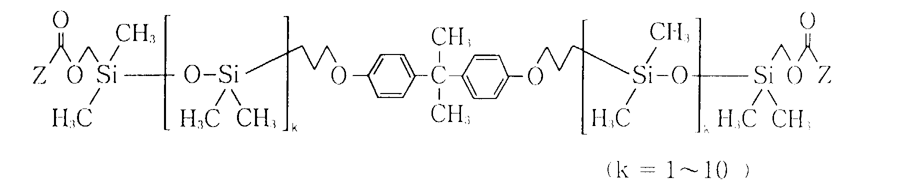

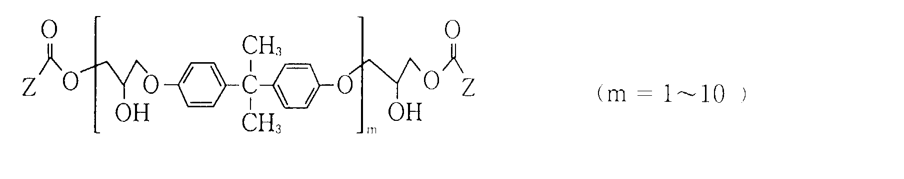

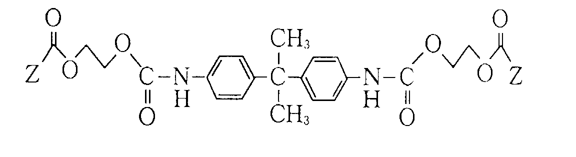

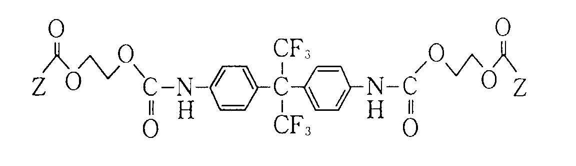

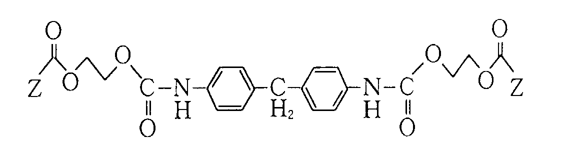

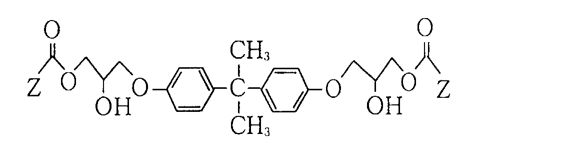

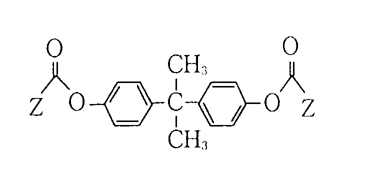

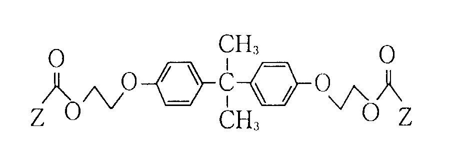

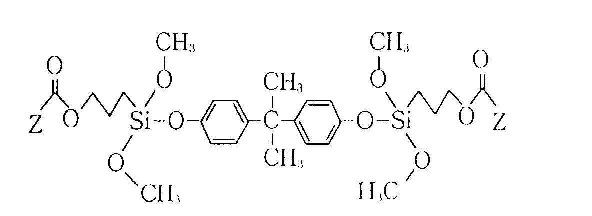

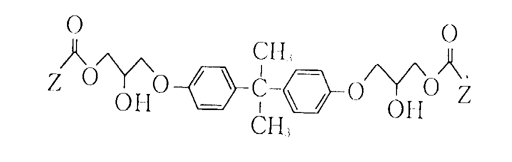

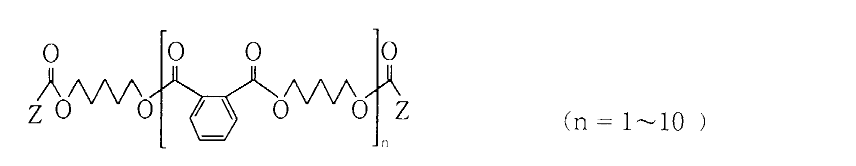

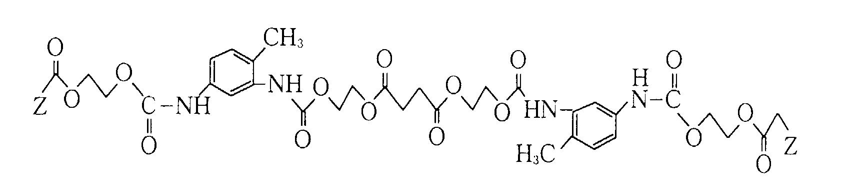

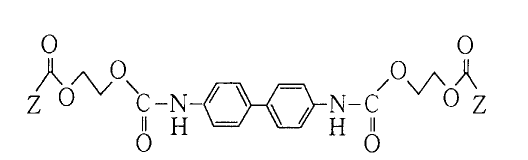

In the above formulae, z is CH₂=CH- or

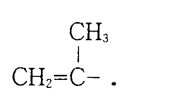

Component (C) is blended in an amount effective to promote bonding, preferably at about 0.1 to 20 parts by weight, and more preferably about 1 to 10 parts by weight, per 100 parts by weight of component (A). Less than 0.1 part of component (C) may impart a low bonding effect whereas more than 20 parts of component (C) tends to detract from rubbery elasticity.

In the rubber composition of the invention, an organic peroxide (D) is blended as a catalyst for assisting in curing the uncured rubber. The organic peroxide may be selected from a variety of organic peroxides used in prior art rubber compositions of this type, for example, di-t-butyl peroxide, t-butyl cumyl peroxide, dicumyl peroxide, 2,5-dimethyl-2,5-di(t-butyl-peroxy)hexyne-3, 1,3-bis(t-butyl-peroxy-isopropyl)benzene, n-butyl-4,4-bis(t-butyl-peroxy)valerate, benzoyl peroxide, t-butylperoxybenzoate, t-butylperoxy isopropyl carbonate, and t-butylperbenzoate, as well as bis(2-methylbenzoyl)peroxide, bis(4-methylbenzoyl)peroxide, and 2,4-dichlorobenzoyl peroxide.

The organic peroxide is blended in an effective amount to promote curing, typically in an amount of about 0.1 to 20 parts by weight per 100 parts by weight of component (A).

To the composition of the invention, silane and siloxane compounds are added if desired. These compounds are effective for improving adhesion whether or not they have radical functional groups.

The rubber composition of the invention is obtained by mixing the above-described components (A), (C), and (D). When the reinforcing filler is blended, the rubber composition is preferably obtained by first mixing component (A) with the reinforcing filler and mixing the resulting mixture with component (C). It is not recommended to mix the reinforcing filler with component (C) together. In most cases, component (D) is preferably added on use although component (D) may be previously mixed with the above premix.

Mixing may be carried out by means of well-known mixers such as mixing rolls, Banbury mixers, kneaders, pressure kneaders, and twin-roll mills. In the mixing step, any suitable additives may be blended in the rubber composition containing the base polymer. Such additives are vulcanization accelerators, antioxidants, processing aids, parting agents, foaming agents, flame retardants, and coloring agents. The stage when these additives are added is not critical. The additives may be added at the same time when components (A) and (B) are mixed or later. Of course, plasticizers should be added during mixing of components (A) and (B). A particular additive may be added at an appropriate stage depending on its purpose.

In a pressure molding process using a mold, the rubber composition can be cured with the organic peroxide into a rubbery elastomer. If an organic resin is placed in the mold, the rubber composition is cured to the organic resin to form an integrally bonded part. The integrally bonded part may have a rubber/organic resin structure, a rubber/organic resin/rubber structure, or a structure having a plurality of such structures.

The organic resins which can be molded with the rubber composition include thermoplastic resins such as polyamides, polyesters (e.g., polyethylene terephthalate and polybutylene terephthalate), polycarbonates, polyphenylene sulfide, polyphenylene oxide, ABS resins, polystyrene, and polypropylene, and thermosetting resins such as epoxy resins, urethane resins and phenolic resins. The shape of the organic resin or the integrally bonded part is not critical. The integrally bonded parts according to the invention find use in applications where it is desired to use a thermoplastic or thermosetting resin and a rubber part as a sealing material in a bonded manner, for example, in the manufacture of parts of automobiles and household appliances.

There has been described an organic peroxide curing type rubber composition which can be molded and cured to an organic resin in a mold. We find that such rubbers can be firmly bonded to the resin directly without a need for primers or adhesives. Since the rubber does not stick to the mold, the molded part can be readily separated from the mold.

### EXAMPLE

Examples of the invention are given below, together with Comparative Example, by way of illustration and not by way of limitation. All parts are by weight.

### Examples 1-6 and Comparative Examples 1-6

Composition 1 was obtained by mixing 100 parts of EPDM rubber EPT3045 (Mitsui Petro-Chemical K.K.) with 60 parts of carbon black HAF (Asahi Carbon K.K.), 40 parts of process oil Sunpar 2280 (Nippon Sun Petroleum K.K.), 5 parts of active zinc oxide, 1 part of stearic acid, and 1 part of antioxidant Noklac MB (Ouchi Sinko Chemical K.K.) in a pressure kneader at 120°C for 5 minutes.

Using a mixing roll mill, Composition 1 was blended with 3.0 parts of an additive as shown in Table 1 and then similarly with 2.6 parts of 1,1-bis(t-butylperoxy)-3,3,5-trimethylcyclohexane as a curing agent.

As an adhesion test, each of the compositions to which the curing agent had been added was vulcanized to a test piece under pressure, and the integrated part was examined for adhesion. The pressure vulcanizing conditions included 150°C, 10 minutes and a molding pressure of 70 kgf/cm². The test pieces used were made of polycarbonate (PC), polybutylene terephthalate (PBT), and polyethylene terephthalate (PET). As a mold release test, each of the compositions was cured to a chromium-plated steel sheet (Cr) for examining the adhesion therebetween.

The results are shown in Table 1.

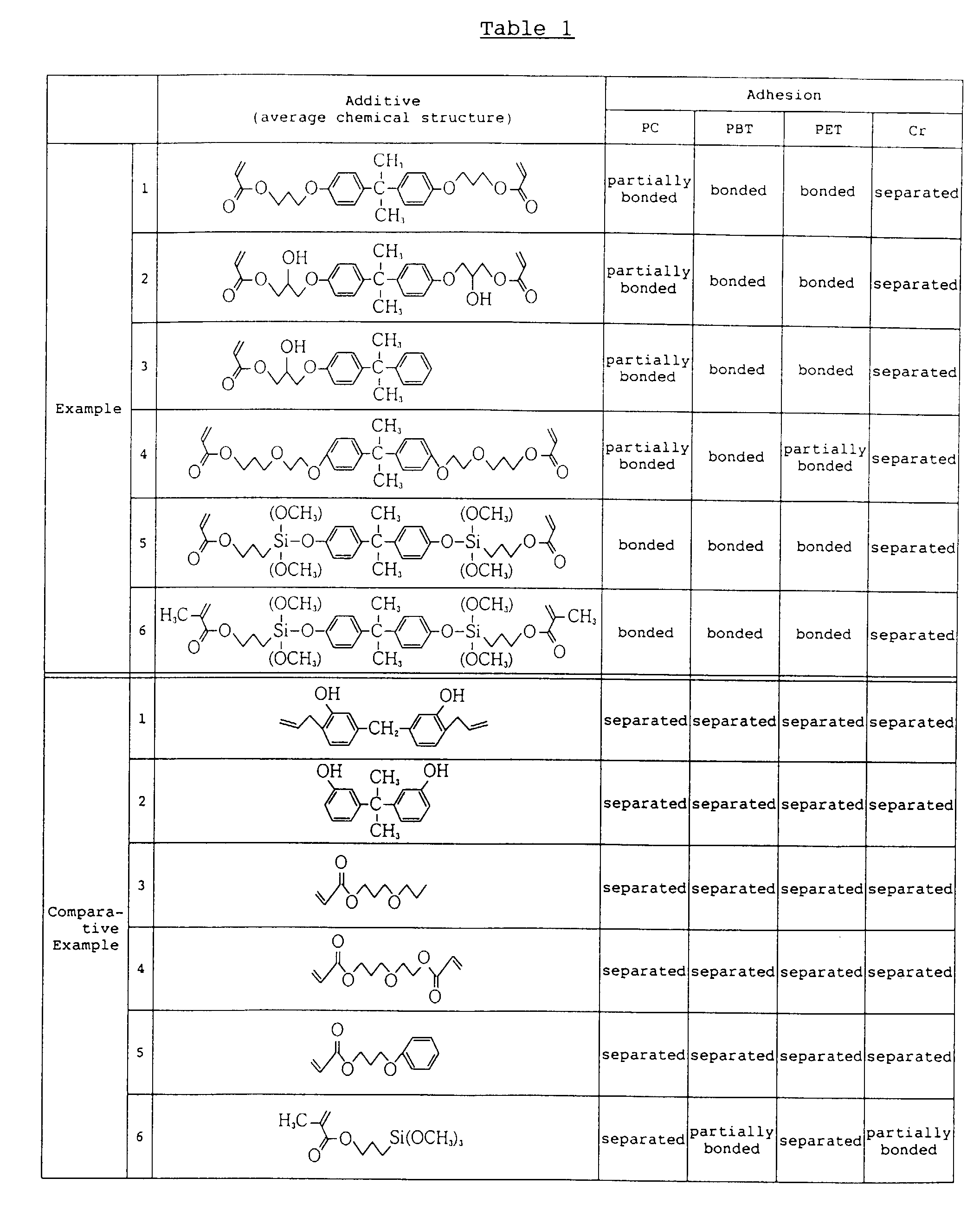

### Examples 7-12

Composition 2 was obtained by mixing 100 parts of EPDM rubber EPT3045 (Mitsui Petro-Chemical K.K.) with 60 parts of carbon black HAF (Asahi Carbon K.K.), 40 parts of process oil Sunpar 2280 (Nippon Sun Petroleum K.K.), 5 parts of active zinc oxide, 1 part of stearic acid, 1 part of antioxidant Noklac MB (Ouchi Sinko Chemical K.K.), and 10 parts of dimethylsiloxane raw rubber containing 0.2 mol% of vinyl groups in a pressure kneader at 120°C for 5 minutes.

Using a mixing roll mill, Composition 2 was blended with 3.0 parts of an additive as shown in Table 2 and then similarly with 2.6 parts of 1,1-bis(t-butylperoxy)-3,3,5-trimethylcyclohexane as a curing agent.

As an adhesion test, each of the compositions to which the curing agent had been added was vulcanized to a test piece under pressure, and the integrated part was examined for adhesion. The pressure vulcanizing conditions included 150°C, 10 minutes and a molding pressure of 70 kgf/cm². The test pieces used were made of polycarbonate (PC), polybutylene terephthalate (PBT), and polyethylene terephthalate (PET). As a mold release test, each of the compositions was cured to a chromium-plated steel sheet (Cr) for examining the adhesion therebetween.

The results are shown in Table 2.

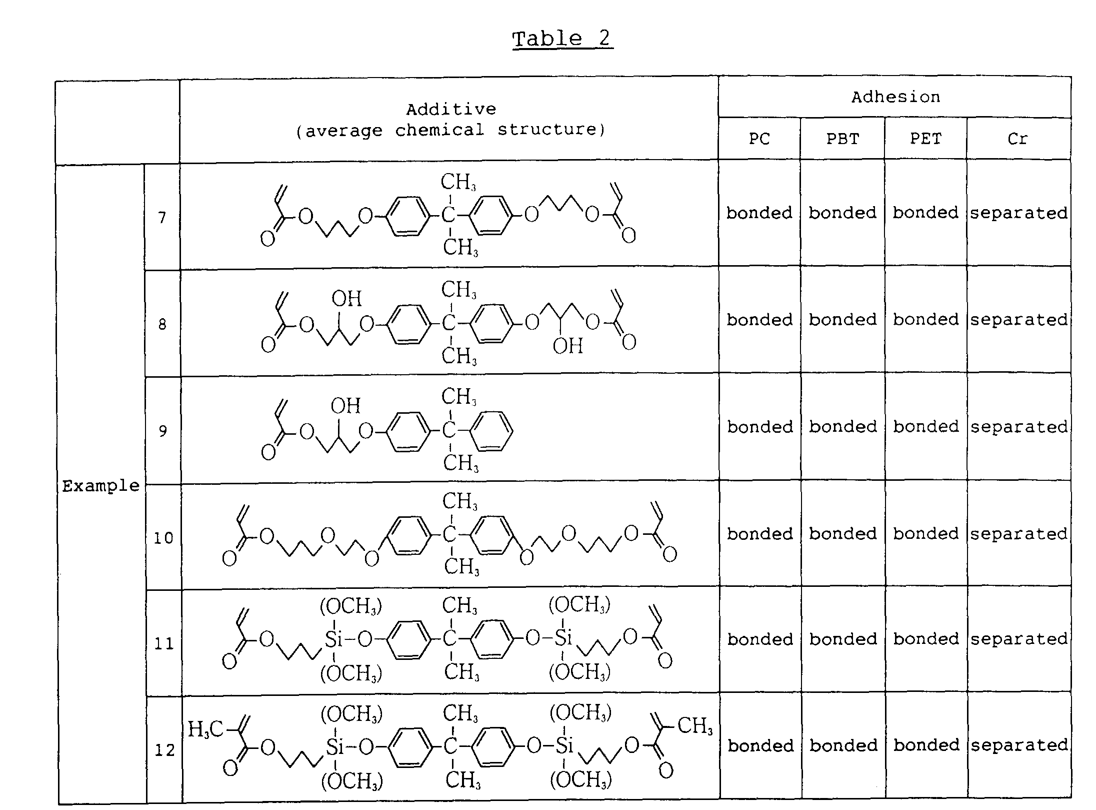

### Examples 13-18 and Comparative Examples 7-12

Composition 3 was obtained by adding 40 parts of surface treated silica having a specific surface area of 200 m²/g (R-972, Nippon Aerosil K.K.) to 100 parts of a raw rubber-like organopolysiloxane consisting of 99.825 mol% of dimethylsiloxane units, 0.15 mol% of methylvinylsiloxane units, and 0.025 mol% of dimethylvinylsiloxane units and having an average degree of polymerization of about 5,000. The mixture was heat treated at 150°C for 2 hours.

Using a mixing roll mill, Composition 3 was blended with an additive as shown in Table 3 and then similarly with 0.55 part of 2,5-dimethyl-2,5-bis(t-butylperoxy)hexane as a curing agent.

As an adhesion test, each of the compositions to which the curing agent had been added was vulcanized to a test piece under pressure, and the integrated part was examined for adhesion. The pressure vulcanizing conditions included 150°C, 10 minutes and a molding pressure of 70 kgf/cm². The test pieces used were made of polycarbonate (PC), polybutylene terephthalate (PBT), and polyethylene terephthalate (PET). As a mold release test, each of the compositions was cured to a chromium-plated steel sheet (Cr) for examining the adhesion therebetween.

The results are shown in Table 3.

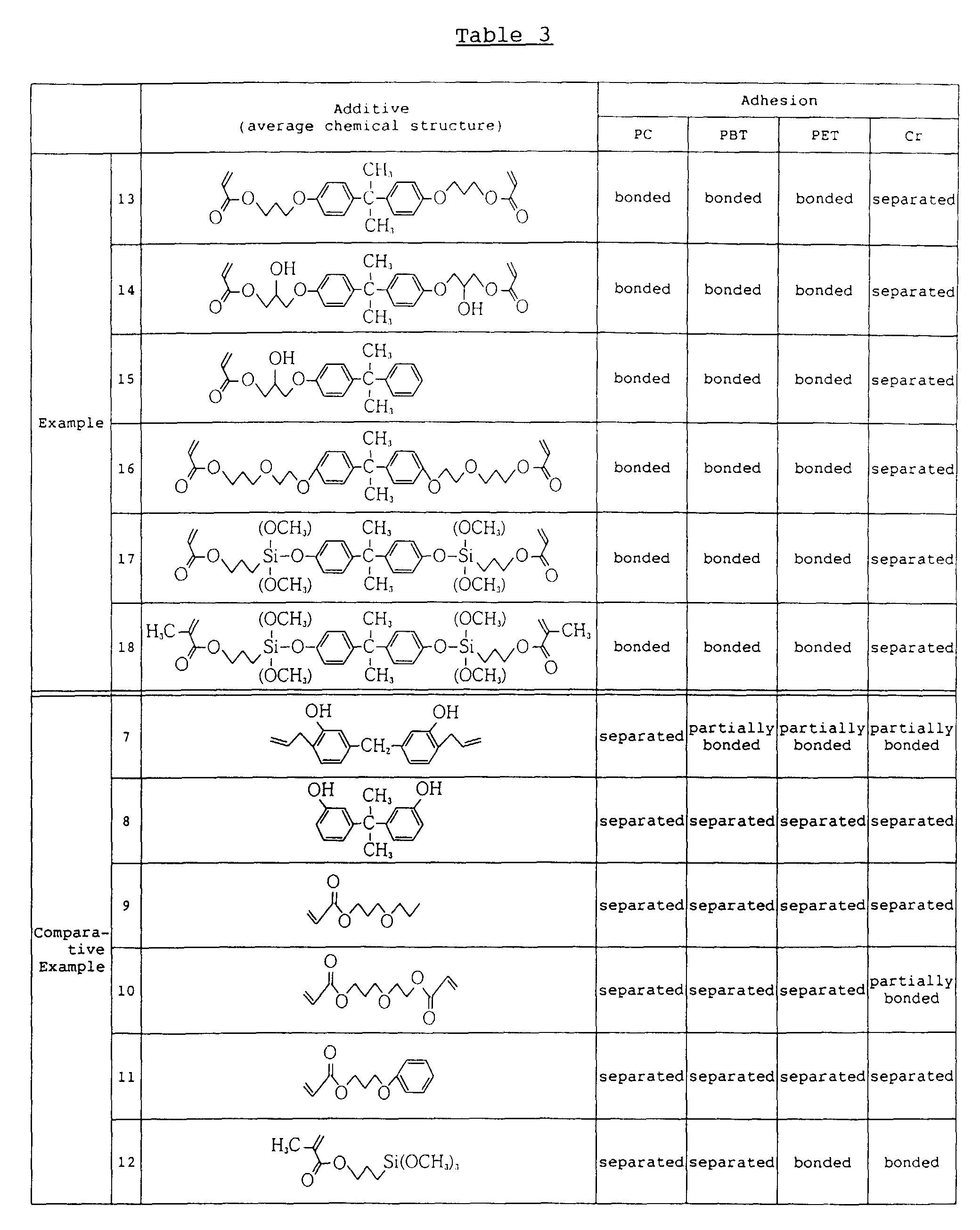

Japanese Patent Application No. 150419/1997 is incorporated herein by reference.

Although some preferred embodiments have been described, many modifications and variations may be made thereto in the light of the above teachings. It is therefore to be understood that within the scope of the appended claims, the invention may be practiced otherwise than as specifically described.

## Claims

1. A rubber composition suitable for adhesion to organic resin, comprising
- uncured rubber, curable using organic peroxide, and
- a resin adhesion component selected from compounds having per molecule at least two phenyl skeletons and at least one (meth)acryl group.

2. A composition according to claim 1 comprising inorganic filler.

3. A composition according to claim 1 and claim 2 comprising organic peroxide for curing the rubber.

4. A composition according to any one of the preceding claims wherein said compound(s) include a group of the following formula: 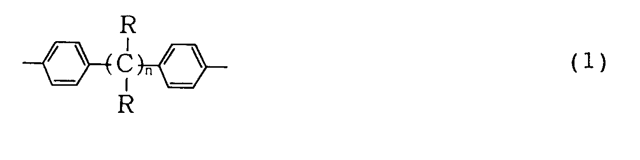 wherein groups R, which may be the same or different, are selected from H and monovalent hydrocarbon groups and n is an integer from 0 to 5.

5. A method in which a rubber composition as defined in any one of claims 1 to 4 is peroxide-cured in contact with an organic resin to bond the cured rubber to the resin.

6. A method according to claim 5 in which the curing and bonding take place in a mould.

7. A bonded composite obtained by a method according to claim 5 or claim 6.

8. The use of a compound having per molecule at least two phenyl skeletons and at least one (meth)acryl group as a blend ingredient in peroxide-curing rubber to promote adhesion thereof to organic resin.
